# EUROPÄISCHE PATENTSCHRIFT

(11) **EP 0 876 626 B1**
(45) Veröffentlichungstag und Bekanntmachung des Hinweises auf die Patenterteilung: **05.06.2002**
(21) Anmeldenummer: 97907015.8
(22) Anmeldetag: 17.01.1997
(51) Int. Cl.: G01T 1/28, G01T 1/29

(54) **ORTSEMPFINDLICHE MESSEINRICHTUNG**
LOCATION-SENSITIVE MEASURING DEVICE
DISPOSITIF DE MESURE SENSIBLE A LA LOCALISATION

(30) Priorität: 23.01.1996 DE 19602177
(43) Veröffentlichungstag der Anmeldung: 11.11.1998
(73) Patentinhaber: FORSCHUNGSZENTRUM JÜLICH GMBH, 52425 Jülich (DE)
(72) Erfinder: HALLING, Horst, D-52459 Pier (DE); WEBER, Simone, D-52428 Jülich (DE)
(86) Internationale Anmeldenummer: DE9700126
(87) Internationale Veröffentlichungsnummer: WO9727501

(56) Entgegenhaltungen:
- DE-A- 3 336 810
- US-A- 4 165 462
- US-A- 4 481 419
- NUCLEAR INSTRUMENTS AND METHODS IN PHYSICS RESEARCH, Bd. a348, 1994, AMSTERDAM NL, Seiten 668-672, XP002033609 BIRD,A J ET AL.: "multi-channel readout of crossed-wire anode photomultipliers" in der Anmeldung erwähnt
- NUCLEAR INSTRUMENTS AND METHODS IN PHYSICS RESEARCH, Bd. a320, 1992, AMSTERDAM NL , Seiten 562-568, XP002033610 KANJO,M ET AL : "two-dimentional neutron scintillation detector with optimal gamma discrimination" in der Anmeldung erwähnt

## Beschreibung

Die Erfindung bezieht sich auf eine Meßeinrichtung mit einem ortsauflösenden Konverter zur Umwandlung einfallender Strahlung in Licht und einem ortsauflösenden Sekundärelektronenvervielfacher zur Umwandlung des Lichtes in ein elektrisches Signal.

Eine derartige Meßeinrichtung ist beispielsweise aus A. J. Bird, Z. He, D. Ramsden, Multi-channel readout *of crossed-wire* anode photomultipliers, Nuclear Instruments and Methods in Physics Research A348 (1994), 668-672, M. Kanyo, R. Reinartz, J. Schelten, K. D. Müller, Two-dimensional neutron scintillation *detector* with optimal gamma discrimination, Nuclear Instruments and Methods in Physics Research A320 (1992), 562-568 bekannt. Einfallende γ-Strahlung wird vom Konverter in Lichtblitze umgewandelt. Die Lichtblitze treffen auf eine Photokathode des Sekundärelektronenvervielfacher auf. Infolgedessen treten Elektronen aus der Kathode aus und werden im Elektronenvervielfacher zu einem elektrischen Meßsignal verstärkt. Diese Elektronen bilden am Ausgang des Sekundärelektronenvervielfachers eine Elektronenwolke, deren Schwerpunkt dem Auftreffort der γ-Strahlung auf dem Konverter zugeordnet werden kann. Über eine nachfolgende Analogelektronik wird eine die Schwerpunktbildung der Meßsignale (bestehend aus Addition, Subtraktion und Division von Signalen) durchgeführt. Der oder die berechneten Schwerpunkte liefern also die Ortsinformation. Auf diese Weise ist es möglich, die Strahlungsintensität sowie die Energie der Strahlung ortsabhängig zu bestimmen.

Die bekannten ortsempfindlichen Meßeinrichtungen weisen den Nachteil auf, daß die einfallende Strahlung in Abhängigkeit vom Auftreffort der γ-Strahlung auf den Konverter ein unterschiedlich starkes Meßsignal bewirken. Diese apparativ bedingten, ortsabhängigen Unterschiede erschweren die Berechnung des Schwerpunktes. Ist die Analogelektronik beispielsweise auf starke Signale ausgerichtet, so werden kleine Signale nicht registriert werden. In diesem Fall ist die Schwerpunktsberechnung und damit eine Ortsbestimmung sogar unmöglich.

Um die Schwerpunktbildung zu umgehen, ist eine andere Technik gemäß A. J. Bird, Z. He, D. Ramsden, Multi-channel readout of *crossed-wire* anode photomultipliers, Nuclear Instruments and Methods in Physics Research A348 (1994), 668-672 entwickelt worden. Diese Technik weist jedoch den Nachteil auf, eine teure Analogelektronik zu benötigen.

Zur Unterdrückung von γ-Strahlung aus unerwünschten Energiebereichen werden Energieschwellen (minimal und maximal erlaubte Signalhöhen) gesetzt, außerhalb derer ein Meßereignis verworfen wird (Pulshöhendiskriminierung). Apparativ bedingte Unterschiede in den Meßsignalen führen in diesem Fall zu Bereichen, in denen jedes Ereignis verworfen wird.

Zur Überwindung dieses Problems wurde eine dynamische ortsabhängige Pulshöhendiskriminierungs-Methode entwickelt (M. Kanyo, R. Reinartz, J. Schelten, K. D. Müller, Two-dimensional neutron scintillation *detector* with optimal gamma discrimination, Nuclear Instruments and Methods in Physics Research A320 (1992), 562-568). Diese Technik erfordert nachteilhaft eine aufwendige Digitalelektronik, die der Analogelektronik nachgeschaltet ist.

Aufgabe der Erfindung ist die Schaffung einer ortsempfindlichen Meßeinrichtung, bei der auf einfache Weise das Problem der unterschiedlich starken Meßsignale vermindert wird.

Gelöst wird die Aufgabe durch eine ortsempfindliche Meßeinrichtung mit den Merkmalen des Anspruchs.

Zwischen Konverter und Sekundärelektronenvervielfacher ist ein Mittel zur Lichtabschwächung, d. h. zur Lichtabsorption vorgesehen. Der Grad der Lichtabschwächung (Absorptionsgrad) variiert bei diesem Mittel ortsabhängig. Die Ortsabhängigkeit ist so gewählt, daß hierdurch die apparativ bedingten Unterschiede bezüglich der Ausgangssignale vermindert werden. An einem Ort, bei dem eine auftreffende Strahlung ohne das Lichtabschwächungsmittel ein starkes Meßsignal verursachen würde, ist folglich der Grad der Lichtabschwächung hoch gewählt. Umgekehrt ist an einem Ort, bei dem eine auftreffende Strahlung ein schwaches Meßsignal verursachen würde, der Grad der Lichtabschwächung gering gewählt oder aber es findet im Extremfall überhaupt keine Lichtabschwächung statt. Auf diese Weise werden die apparativ bedingten, ortsabhängigen Unterschiede zwischen den verschiedenen Meßsignalen vermindert, d. h. die Homogenität der Ausgangssignale des Sekundärelektronenvervielfachers wird verbessert.

Ein besonders einfaches Mittel zur Lichtabschwächung stellt eine lichtabschwächende Schicht dar. Es kann sich dabei um eine Folie, einen Film, eine Glasscheibe oder eine LCD-Schicht handeln, bei denen Bereiche mit unterschiedlichen Schwärzungsgraden vorgesehen sind. Der Grad der Schwärzung und damit der Grad der Absorption ist ortsabhängig umso stärker, je größer die apparativ bedingten Meßsignale gewesen wären, die die Meßeinrichtung ohne die lichtabschwächende Schicht an diesen Orten ausgegeben hätte.

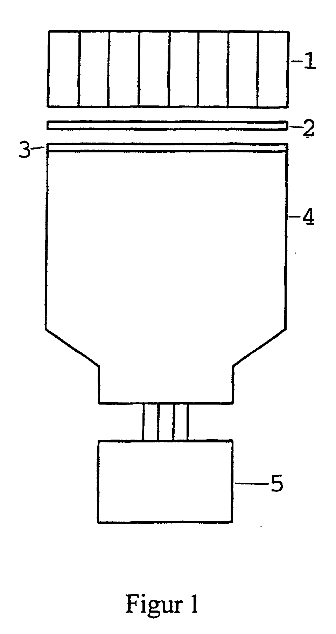

Es zeigen
- Figur 1:: Seitenansicht der Meßeinrichtung
- Figur 2:: Aufsicht auf eine Schicht zur Lichtabschwächung

Ein modular aufgebauter Konverter 1 wandelt Strahlung in Licht um. Das umgewandelte Licht passiert eine Schicht 2, die der ortsabhängigen Lichtabschwächung dient.

Das oitsabhängig abgeschwächte Licht trifft auf die Photokathode 3 auf. Hier treten infolge des auftreffenden Lichtes Elektronen heraus und werden im ortsempfindlichen Sekundärelektronenvervielfacher 4 zum ortsabhängigen Meßsignal verstärkt. Mittels einer nachfolgenden Analogelektronik 5 wird eine Schwerpunktbildung (bestehend aus Addition, Subtraktion und Division von Signalen) durchgeführt.

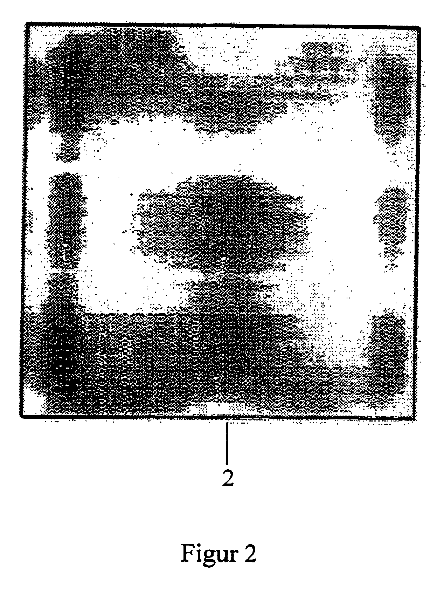

Figur 2 zeigt eine Aufsicht auf ein typisches Ergebnis einer der Lichtschwächung dienenden Folie. Sie weist zu diesem Zweck Bereiche mit unterschiedlichen Schwärzungsgraden auf. Sie wurde wie folgt hergestellt.

Zunächst wurde die Verstärkungsinhomogenität (=apparativ bedingte, ortsabhängige Unterschiede der Vervielfachung) des Sekundärelektronenvervielfachers sowie die Inhomogenität (=apparativ bedingte, ortsabhängige Unterschiede bezüglich der Umwandlung) des Konverters bestimmt. Anhand dieser Daten wurde die lichtschwächende Folie 2 erzeugt, die an den Stellen mit hoher Lichtausbeute des Konverters bzw. hoher Verstärkung des Sekundärelektronenvervielfachers stark geschwärzt ist und folglich das Licht an diesen Orten so weit absorbiert, daß die Signalhöhe am Ausgang des Sekundärelektronenvervielfachers gleich der Signalhöhe ist, die an Stellen mit geringer Verstärkung erreicht wird. Entsprechend geringer ist die Folie dort geschwärzt, wo eine vergleichsweise kleinere Konvertierung oder geringere Verstärkung erfolgt. Keine Schwärzung der Folie ist an den Stellen vorgesehen, bei denen sowohl Konvertierung als auch Verstärkung gering sind.

Um den Ausgleich von Verstärkungsinhomogenitäten mittels teilweise absorbierender Schichten zu testen, wurde ein Sekundärelektronenvervielfacher (SEV) des Typs Hamamatsu R2487 verwendet. Dieser SEV hat eine von der Lieferfirma angegebene Inhomogenität von 1:3.

Die Photokathode dieses SEV wurde mit einem Lichtpunkt (Ø 1 mm) von einer blauen LED abgerastert.
Gespeichert wurden die x-y-Positionen sowie die entsprechenden Signalhöhen. Die Daten wurden als 2-dimensionaler Plot in Graustufen dargestellt, und zwar derart, daß eine hohe Signalhöhe einer starken Schwärzung entspricht (Fig. 2). Dieser Plot wurden mit einem hochauflösenden Drucker auf einer Folie ausgedruckt. Die Folie wurde vor die Photokathode des SEV gelegt, und die Messung wurde wiederholt. Es ergab sich aufgrund der Folie eine homogene Schwächung der Signale um < 10%. Die Bereiche mit hoher Verstärkung zeigten eine deutliche Reduzierung der Signalhöhe, so daß eine Homogenisierung der Ausgangssignale erreicht wurde.

## Patentansprüche

1. Meßeinrichtung mit einem ortsauflösenden Konverter (1) zur Umwandlung einfallender Strahlung in Licht und einem ortsauflösenden Sekundärelektronenvervielfacher (4) zur Umwandlung des Lichtes in ortsabhängige elektrische Meßsignale,
**gekennzeichnet durch**
eine zwischen Konverter (1) und Sekundärelektronenvervielfacher (4) befindliche Folie, Film, Glasscheibe oder LCD-Schicht, wobei die Folie, der Film, die Glasscheibe oder die LCD-Schicht Bereiche mit unterschiedlichen Schwärzungsgraden zur Lichtabschwächung(2) aufweisen, wobei der Grad der Lichtabschwächung ortsabhängig so gewählt ist, daß apparativ bedingte ortsabhängige Unterschiede der elektrischen Meßsignale hierdurch vermindert werden.

## Claims

1. A measuring device comprising a converter (1), which exhibits location-dependent resolution, for converting incident radiation into light, and a secondary electron multiplier (4), which exhibits location-dependent resolution, for converting light into location-dependent electrical measuring signals,
**characterised by**
a foil, a film, a glass plate or an LCD layer situated between the converter (1) and the secondary electron multiplier (4), wherein the foil, the film, the glass plate or the LCD layer comprise regions with different degrees of blackening for optical attenuation (2), wherein the degree of optical attenuation is selected depending on the location so that location-dependent differences in electrical measuring signals which are due to the apparatus are thereby reduced.

## Revendications

1. Dispositif de mesure avec un convertisseur à résolution locale (1) pour la conversion en lumière d'un rayonnement incident et avec un multiplicateur d'électrons secondaires à résolution locale (4) pour la conversion de la lumière en signaux électriques de mesure qui sont fonction du lieu, **caractérisé par** une feuille, un film, une vitre ou une couche à cristaux liquides se trouvant entre le convertisseur (1) et le multiplicateur d'électrons secondaires (4), la feuille, le film, la vitre ou la couche à cristaux liquides étant muni de zones avec différents degrés de noircissement pour l'affaiblissement de la lumière (2) et le degré d'affaiblissement de la lumière étant choisi en fonction du lieu de telle manière que des différences dans les signaux électriques de mesure, qui sont dues aux appareils et qui sont fonction du lieu, soient ainsi évitées.
